# EUROPEAN PATENT APPLICATION

(11) **EP 4 621 380 A1**
(43) Date of publication of application: **24.09.2025**
(21) Application number: 24832479.0
(22) Date of filing: 27.06.2024
(51) Int. Cl.: G01N 15/0227, G01N 21/94, G01N 21/88, G02B 21/00, G02B 21/36, G01N 15/00, G01N 21/17

(54) **ANALYSIS SYSTEM AND ANALYSIS METHOD FOR FOREIGN SUBSTANCES IN CATHODE MATERIAL**

(30) Priority: 30.06.2023 KR 20230085370
(71) Applicant: LG Energy Solution, Ltd., Seoul 07335 (KR)
(72) Inventor: JO, Jin Hyoung, Daejeon 34122 (KR); LEE, Hyun Jun, Daejeon 34122 (KR); CHAE, Byung Joon, Daejeon 34122 (KR); KIM, Jae Sung, Daejeon 34122 (KR)
(74) Representative: Goddar, Heinz J.
(86) International application number: PCT/KR2024/009041
(87) International publication number: WO 2025/005702

(57) **Abstract**

The present invention relates to a system and method for analyzing foreign substances in a positive electrode material, the system includes a pretreatment part configured to prepare a monolayer sample of a positive electrode material powder, a measurement part configured to obtain an optical image of the monolayer sample using an optical microscope, and an analysis part configured to analyze the optical image of the monolayer sample, thereby obtaining information on foreign substances in the positive electrode material.

## Description

### TECHNICAL FIELD

The present application claims the benefit of the priority of Korean Patent Application Nos. 10-2023-0085370, filed on June 30, 2023, which are hereby incorporated by reference in their entirety.

The present invention relates to a system and method for analyzing a foreign substance in a positive electrode material, and more particularly, to a system and method for analyzing a foreign substance in a positive electrode material, which is capable of quantitatively analyzing a shape and composition of the foreign substances that may cause a low voltage in the positive electrode material.

### BACKGROUND ART

The production process of lithium-ion batteries involves various manufacturing processes, each of which has multiple defect factors that may affect battery performance. Among these, defects caused by mixing of foreign substances into the raw materials are particularly frequent and require significant quality-related costs, as they may necessitate the disposal of the finished batteries. Moreover, even if the equipment is functioning properly, there is still a risk of receiving raw materials contaminated with foreign substances from suppliers, making an effective detection method necessary.

The type of defect caused by the mixed foreign substances varies depending on their physical properties and sizes. For example, large foreign particles may tear the separator during the rolling process, leading to short-circuit defects caused by direct contact between the positive electrode and the negative electrode. Also, non-conductive foreign substances may increase internal resistance, thereby reducing the maximum output. However, the defects occurring from such foreign substances may be relatively easily detected during the activation process. On the other hand, metallic foreign substances within the positive electrode material may be ionized in the electrolyte as the charging/discharging cycles repeat, undergoing processes such as recrystallization in the pores of the separator or on the negative electrode which makes difficulty of immediate detection of defects. Consequently, the recrystallized foreign substances may lead to low-voltage defects that cause significant voltage drop and increasing self-discharge rate, during battery storage prior to the shipment.

Typically, methods such as inductively coupled plasma (ICP) or X-ray fluorescence (XRF) have been used to detect metallic foreign substances in positive electrode materials. However, ICP-AES has the advantage of detecting trace amounts of foreign substances at the ppm level, it is difficult to determine the shape of the foreign substances, and thus it is difficult to identify the source of the contamination, and also even when using active materials that have passed quality inspections as documented in the certificate of analysis (COA), low-voltage issues may still arise. Meanwhile, the XRF allows for the analysis of large quantities of active materials but has difficulty detecting foreign substances smaller than a certain size (< 40 µm).

Recently, detection methods using scanning electron microscope-energy dispersive spectroscopy (SEM-EDS), which may confirm both the shape and composition of foreign particles and detect fine particles, have been attempted, however, the substantial time is required for measuring large-areas, and thus it has the disadvantage of being difficult to be applied in industrial application.

Therefore, there is a need for a new method of analyzing foreign substances in positive electrode materials that may detect the shape and composition of metallic foreign substances with a size of about 40 µm or less within a short period.

### DISCLOSURE OF THE INVENTION

### TECHNICAL PROBLEM

The present invention has been invented to solve the above-mentioned problems, and an object of the present invention is to provide a system and method for analyzing foreign substances in positive electrode materials that may quickly detect a shape and composition of fine metallic, foreign substances present in positive electrode material powder.

### MEANS FOR SOLVING PROBLEM

According to an aspect of the present invention, there is provided a system for analyzing metallic foreign substances in a positive electrode material, the system including: a pretreatment part configured to prepare a monolayer sample of a positive electrode material powder; a measurement part configured to obtain an optical image of the monolayer sample using an optical microscope; and an analysis part configured to analyze the optical image of the monolayer sample, thereby obtaining information on foreign substances in the positive electrode material; wherein the pretreatment part comprises a substrate on which the positive electrode material powder is applied and a first member configured to remove a portion of the positive electrode material powder applied on the substrate to allow positive electrode material particles to be distributed in a monolayer.

According to another aspect of the present invention, there is provided a method for analyzing metallic foreign substances in a positive electrode material, the method including: a first process of applying positive electrode material powder onto a substrate and removing a portion of the applied positive electrode material powder to manufacture a monolayer sample; a second process of obtaining an optical image of the monolayer sample using an optical microscope; and a third process of analyzing the optical image of the monolayer sample to obtain information on foreign substances in the positive electrode material.

According to another aspect of the present invention, there is provided an optical microscope including: a light source; a CCD camera disposed below the light source and configured to capture an optical image of a sample; a lens part disposed below the CCD camera and configured to magnify the image of the sample; a mounting part which is disposed below the lens par and on which the sample is placed; a driving part configured to move the mounting part and the lens part; and a polarizing part disposed between the light source and the CCD camera to eliminate diffuse-reflected light from the sample.

### ADVANTAGEOUS EFFECTS

The system and method for analyzing the metallic foreign substances in the positive electrode materials according to the present invention may involve the detecting of the metallic foreign substances that differ in color and brightness from the positive electrode active material by analyzing the optical images obtained using the optical microscope. When utilizing the system and method of the present invention, it may be possible to obtain the shape information of the metallic foreign substances with the size of about 40 µm or less in the shorter time compared to the conventional methods.

Additionally, when the laser light source is attached to the optical microscope, the laser may be used to irradiate the detected metallic foreign substances to analyze the line spectrum emitted during their destruction, the compositional information of the metallic foreign substances may also be obtained.

In this way, when using the system and method for analyzing the metallic foreign substances in the positive electrode materials according to the present invention, it may be possible to obtain the shape and compositional information of the metallic foreign substances within the positive electrode material that are not analyzed in the conventional methods. As a result, it allows for more effective management of the foreign substances within the positive electrode material, thereby suppressing the defects such as the low-voltage phenomena.

### BRIEF DESCRIPTION OF THE DRAWINGS

FIG. 1 is a schematic side view illustrating a process of manufacturing a monolayer sample according to a first aspect of the present invention.
FIG. 2 is a schematic perspective view illustrating a process of manufacturing a monolayer sample according to a second aspect of the present invention.
FIG. 3 is images illustrating a difference in optical image according to a light source irradiation method of an optical microscope.
FIG. 4 is graphs illustrating spectrum data according to the light source irradiation method of the optical microscope.
FIG. 5 is images illustrating a difference in optical image depending on the presence or absence of a polarizing part in the optical microscope.
FIG. 6 is images illustrating a result of detecting metallic foreign substances according to the present invention.
FIG. 7 is an image illustrating a sample manufactured using a stretchable substrate and a sample manufactured using a carbon tape.
FIG. 8 is images illustrating an optical image (A) of a sample manufactured by applying positive electrode material powder onto an adhesive substrate and then removing an upper layer particle with a delaminating member, and an optical image (B) of a sample manufactured by applying the positive electrode material powder onto the adhesive substrate without undergoing the particle removal process with a delaminating member.
FIG. 9 is images illustrating a result of analyzing the composition of metallic foreign substances using a laser.
FIG. 10 is a perspective view illustrating a structure of the optical microscope according to the present invention.

### MODE FOR CARRYING OUT THE INVENTION

Hereinafter, the present invention will be described in detail.

### Analysis System

First, a system for analyzing metallic foreign substances in a positive electrode material according to the present invention will be explained.

The analysis system according to the present invention is provided to analyze metallic foreign substances contained in a positive electrode material and includes (1) a pretreatment part, (2) a measurement part, and (3) an analysis part.

The type of positive electrode material powder that is an object to be measured is not particularly limited and may be various types of positive electrode material powder used in the fields of secondary batteries. The positive electrode material powder may include metallic foreign substances and positive electrode active material particles.

The type of metallic foreign substance contained in the positive electrode material powder is not particularly limited and may include various metallic foreign substances that may be mixed during the positive electrode material manufacturing process. For example, the metallic foreign substance may include one or more materials selected from the group consisting of Fe, Cr, Cu, and Zn, but is not limited thereto.

The type of positive electrode active material particle contained in the positive electrode material powder is not particularly limited and may be positive electrode active material particles commonly used in the fields of secondary battery technology. For example, the positive electrode active material particle may be lithium metal oxide that includes one or more metal elements selected from the group consisting of Ni, Co, Mn, and Al. Specifically, it may be LiₓNiₐCo_{b}M1_{c}M2_{1-a-b-c}O_{2+y} (here, M1 may include at least one of Al and Mn, and M2 may include one or more elements selected from Ba, Ca, Zr, Ti, Mg, Ta, Nb, Mo, W, P, Sr, Bi, Zn, Cr, and V. The values may be 0.8 ≤ x ≤ 1.2, 0 ≤ a ≤ 1, 0 ≤ b ≤ 1, 0 ≤ c ≤ 1, 0 ≤ y ≤ 2, and preferably 0.8 ≤ x ≤ 1.2, 0 ≤ a ≤ 0.5, 0 ≤ b ≤ 0.5, 0 ≤ c ≤ 0.2, 0 ≤ y ≤ 2).

Hereinafter, each component of the system for analyzing the metallic foreign substance in the positive electrode material according to the present invention will be described in detail.

### (1) Pretreatment Part

The pretreatment part is provided to manufacture a monolayer sample of the positive electrode material powder. The pretreatment part includes a substrate on which the positive electrode material powder is applied and a first member that removes a portion of the positive electrode material powder applied on the substrate to allow the positive electrode material particles to be distributed as a monolayer.

In order to acquire particle information using an optical microscope, the particles in the observed sample has to be evenly dispersed as a monolayer without any eclipse or stacking. If particle stacking or eclipse occurs in the sample, it may result in undetectable foreign substances. Therefore, in the present invention, a monolayer sample of the positive electrode material powder is manufactured through the pretreatment part. Typically, methods such as surface modification for ligands, a thin film manufacture through Langmuir-Blodgett, or lithography for substrate have been used to produce a monolayer sample for microscopic observation. However, such methods are not suitable for application to the positive electrode material powder and require special substrates or ligands, leading to high costs and long processing times. Thus, the present invention provides a novel system and method to manufacture a monolayer sample of positive electrode material powder, thereby reducing both the cost and time required for the monolayer sample manufacture.

According to the first aspect, in the pretreatment part, the substrate may be a stretchable substrate, and the first member may be a pressing member.

The stretchable substrate may be a substrate having elasticity so that when the positive electrode material powder is applied onto the substrate and then pressed by the pressing member, particles of the positive electrode material powder may become embedded in a surface of the substrate. For example, the substrate may be a gel-pad or a Teflon tape, but the present invention is not limited thereto.

The pressing member may be provided to press the positive electrode material powder applied onto the stretchable substrate in one direction, thereby removing the particles disposed on the upper layer of the positive electrode material powder and allowing the positive electrode material particles to be distributed as a monolayer on the stretchable substrate. The pressing member may be a hard and flat object capable of applying a constant external pressure. For example, the pressing member may be a knife made of glass or ceramic material, but it is not limited thereto.

The stretchable substrate may be attached onto a fixed substrate through an adhesive member. The fixed substrate is provided to prevent the stretchable substrate from being bent when an external pressure is applied by the pressing member. For example, it may be a glass substrate like a slide glass, but it is not limited thereto. The adhesive member is used to bond the fixed substrate and the stretchable substrate to each other. For example, it may be double-sided adhesive tape, but it is not limited thereto.

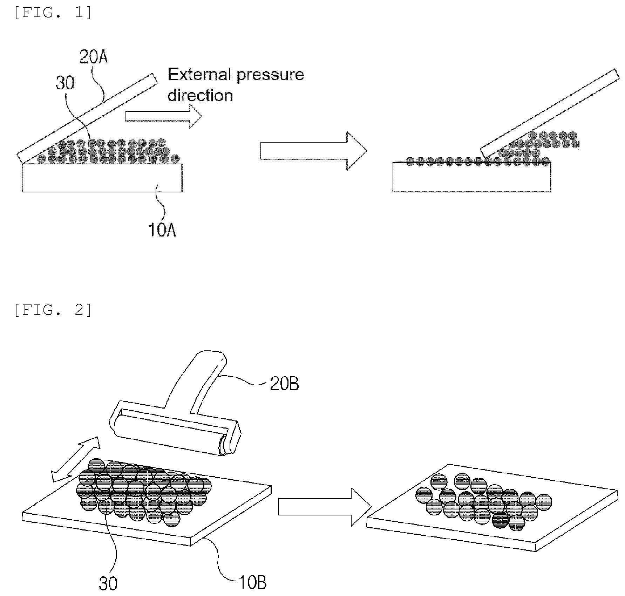

FIG. 1 shows a schematic diagram illustrating a process of manufacturing a monolayer sample in the pretreatment part configured as described above. As shown in FIG. 1, after applying positive electrode material powder 30 onto a stretchable substrate 10A, the applied positive electrode material powder is pushed in one direction using a pressing member 20A. As a result, the positive electrode material particles in an upper layer is pushed and removed by the pressing member, and only positive electrode material particles in the lowest layer remains to be embedded in the surface of the stretchable substrate, resulting in the manufacture of the monolayer sample.

According to the second aspect, in the pretreatment part, the substrate may be an adhesive substrate, and the first member may be a delaminating member.

The adhesive substrate may have sufficient adhesive strength to fix the particles of the positive electrode material powder thereto, but the type of the substrate is not particularly limited. For example, the adhesive substrate may be a particle trap from JOMESA or adhesive tape, but it is not limited to thereto.

The delaminating member may have adhesive strength less than that of the adhesive substrate and be capable of removing the particles existing in the upper layer of the positive electrode material powder applied to the adhesive substrate. For example, a DCR roller may be used, but it is not limited thereto

Here, the pretreatment part may further include a pressing member that presses the applied positive electrode material powder to allow an even distribution onto the adhesive substrate, if necessary. The pressing member may be, for example, a knife made of glass or ceramic material, but it is not limited thereto.

FIG. 2 shows a schematic diagram illustrating a process of manufacturing a monolayer sample in the pretreatment part configured as described above. As shown in FIG. 2, after applying positive electrode material powder 30 onto an adhesive substrate 10B and spreading the positive electrode material powder evenly using the pressing member (not shown), particles disposed in the lowest layer of the positive electrode material powder that are in contact with the adhesive substrate 10B adhere to the adhesive substrate 10B. Then, when the applied positive electrode material powder is pushed by the delaminating member 20B, the positive electrode material particles in the upper layer of the positive electrode material powder adhere to the delaminating member 20B, which has relatively weaker adhesive strength, and thus is removed. Then, the positive electrode material particles in the lowest layer of the positive electrode material powder adhere to the adhesive substrate, which has relatively stronger adhesive strength, and then remain, resulting in the manufacture of the monolayer sample.

### (2) Measurement Part

The measurement part is provided to obtain an optical image of the monolayer sample. In the present invention, the optical image of the monolayer sample manufactured in the pretreatment part may be obtained using an optical microscope. When foreign substance analysis is performed using the optical microscope as described in the present invention, an analysis time may be significantly reduced compared to using a scanning electron microscope (SEM). Specifically, while it takes approximately 350 hours to measure an area of 1 cm² using a scanning electron microscope, an optical microscope may dramatically reduce the required time to allow the same area to be measured in about 1 hour.

Additionally, since an optical microscope uses visible light as a light source, it is possible to identify metallic foreign substances within the positive electrode material from the optical images obtained through the optical microscope by utilizing differences in color and brightness between the positive electrode active material and the metallic foreign substances. Also, information such as a size and location of the metallic foreign substances may also be analyzed using image analysis software that is either integrated with or linked to the optical microscope.

Specifically, the optical microscope may be a digital optical microscope capable of analyzing an image. Preferably, the digital optical microscope has a progressive scanning method, has 16-bit gradation per RGB pixel, and allows for white balance adjustment.

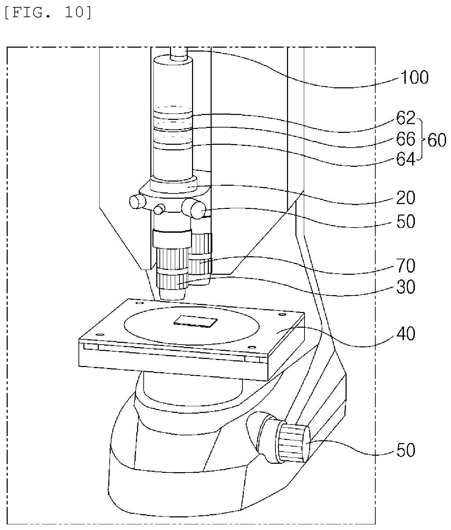

FIG. 10 illustrates an optical microscope according to an aspect of the present invention.

As shown in FIG. 10, the optical microscope may include a light source 100, a CCD camera 20 disposed below the light source to capture an optical image of the sample, a lens part 30 disposed below the CCD camera to magnify the image of the sample, a mounting part 40 disposed below the lens part to allow the sample to be placed thereon, a driving part 50 for moving the mounting part and the lens part, and a polarizing part 60 disposed between the light source and the CCD camera to remove the scattered light from the sample. Here, the sample may be the monolayer sample of the positive electrode material powder manufactured in the pretreatment part.

Here, the light source 100 may be, for example, a high-brightness LED with an adjustable electronic shutter capable of controlling a speed within a range of about 1/60 to about 1/20,000, and it may be preferable that the light source allows for coaxial and ring irradiation. Since the LED output, the speed of the electronic shutter of the light source, and the light source irradiation method are adjusted, brightness of the light source may be finely tuned to maximize a contrast in color and brightness (luminance) between the positive electrode active material and the metallic foreign substances, resulting in an optical image where the metallic foreign substances are clearly identifiable.

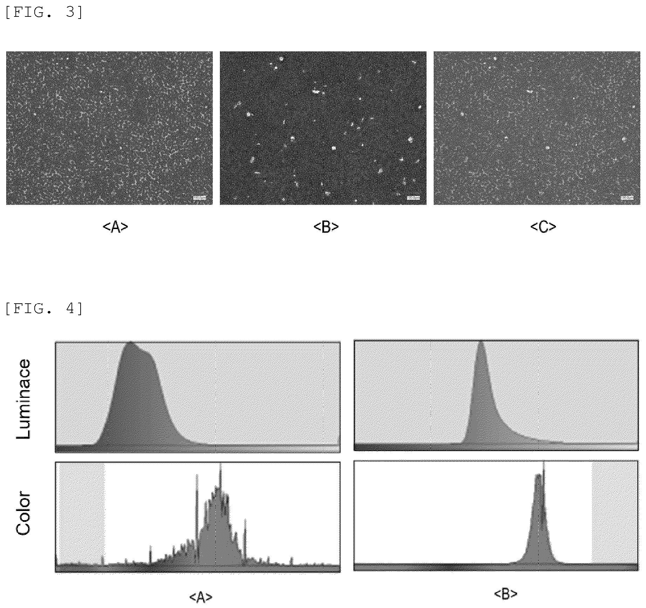

FIG. 3 shows the differences in optical images depending on the light source irradiation method, where part (A) of FIG. 3 is an optical image obtained by coaxially irradiating the sample using the light source, part (B) of FIG. 3 is an optical image obtained by ring-irradiating the sample using the light source, and part (C) of FIG. 3 is an optical image obtained with a 95:5 ratio of ring irradiating to coaxial irradiation with respect to the sample.

FIG. 4 shows the spectrum data depending on the light source irradiation method, where part (A) of FIG. 4 is luminance and color spectrum data of the optical image obtained by ring- irradiating the sample using the light source, and part (B) of FIG. 4 is luminance and color spectrum data of the optical image obtained with a 95:5 ratio of ring irradiating to coaxial irradiating with respect to the sample.

In FIG. 3, it may be observed that the brightness and color of the optical images vary depending on the irradiation method of the light source. On the other hand, when viewed with the naked eye, although foreign substances appear to be most clearly identifiable with the ring irradiation method, as shown in FIG. 4, the contrast in brightness and color was more clearly appeared when both ring and coaxial irradiating were used together. It is considered to be because the optical image obtained by the ring irradiation method includes too much information, resulting in noise. Therefore, in order to increase the contrast in luminance and/or color between the positive electrode active material and the metallic foreign substances, thereby improving the identification of the metallic foreign substances within the positive electrode material, it may be preferable to set the light source irradiation method as a combination of the ring irradiating and the coaxial irradiating.

Next, the CCD camera 20 is provided to capture the image of the sample magnified by the lens part 30, and, for example, it may have a resolution ranging from FHD to 4K. Since when the resolution of the CCD camera is relatively too low, the ability to identify foreign substances may be reduced, and thus, it may be preferable to have a resolution of FHD or higher.

Next, the lens part 30 is provided to magnify the image of the sample, and it may be preferable that the lens part 30 has magnification of about 200x to 500x. When the magnification of the lens part is relatively low, it may be difficult to identify foreign substances having fine sizes, and when it is too high, the area that may be measured at once becomes smaller, thereby increasing the measurement time.

Next, the driving part 50 is provided to horizontally move the mounting part 40 on which the sample is placed, and to vertically move the lens part 30, and the driving part may include a stepping motor. The drive part is adjusted to finely move the mounting part and the lens part to adjust focus while capturing images of the sample.

The polarizing part 60 is provided to remove reflective light diffuse-reflected from materials other than the target to be detected (e.g., the background and the positive electrode active material) to maximize the identification with respect to the target (e.g., metallic foreign substances) in the optical image. The polarizing part includes an upper polarizing plate 62 disposed at a side of the light source 10 and a lower polarizing plate 64 disposed at a side of the CCD camera 20. If necessary, the polarizing part 60 may further include a polarizing filter 66 disposed between the upper polarizing plate 62 and the lower polarizing plate 64.

Here, a polarization axis angle may be adjusted according to the type of material contained in the sample other than the target (e.g., the positive electrode active material) to adjust a degree of diffuse reflection removal. For example, depending on the type of positive electrode active material contained in the positive electrode material powder, the polarization axes of the upper polarizing plate and the lower polarizing plate may be adjusted to an angle between 30° and 150°.

When analyzing a sample with severe diffuse reflection, the polarizing part may further include a polarizing filter between the upper polarizing plate and the lower polarizing plate to improve the identification with respect to the target (e.g., metallic foreign substances) in the optical image. Here, the polarizing filter may be appropriately selected according to the type of sample to be measured. For example, when analyzing positive electrode material powder containing lithium nickel cobalt manganese oxide as the positive electrode active material, a filter such as the OP-88323 from Keyence may be used, but it is not limited thereto.

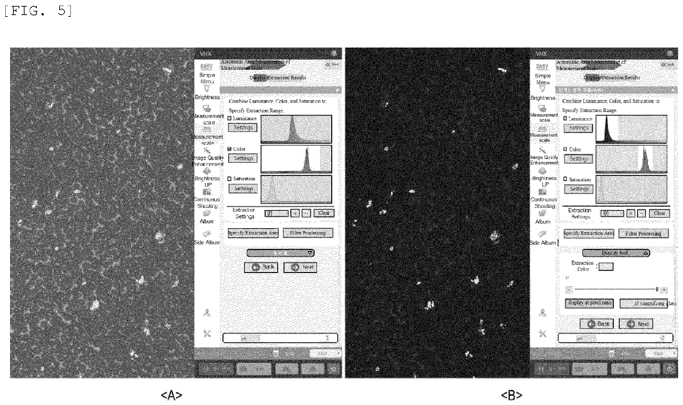

FIG. 5 is a view showing the difference in optical images depending on whether the polarizing part is included. In FIG. 5, part (A) is a view showing the optical image and spectrum data captured using an optical microscope excluding the polarizing part, and part (B) is a view showing the optical image and spectrum data captured using an optical microscope including the polarizing part. Here, the light source in (A) and (B) of the drawing is irradiated in the same manner and under the same conditions.

In FIG. 5, it may be observed that the luminance of the active material particles and the background darkens in the optical image captured with the optical microscope including the polarizing part, thereby improving the identification of the metallic foreign substances.

After placing the monolayer sample, which is manufactured in the pretreatment part, onto the mounting part of the optical microscope as described above, such as the shooting mode, e.g., image settings and color adjustment conditions, and the light source irradiating conditions, e.g., light source brightness and irradiation method, and so on are suitably set. Then, after specifying an area to be captured, the focus is adjusted by controlling the driving part, and then the sample image is captured to obtain the optical image." The obtained optical image is transmitted to the analysis part.

Here, the shooting mode may be appropriately adjusted according to the type of the positive electrode material powder to be measured. For example, when analyzing positive electrode material powder containing lithium nickel manganese cobalt oxide as the positive electrode active material, the image settings may be configured by turning off edge strength, gamma, and offset, and setting RGB to a ratio of R:1.78, G:1.00, B:2.29, but it is not limited thereto, and if the type of positive electrode active material or the type of metallic foreign substance to be detected changes, the shooting mode conditions may also change.

Meanwhile, the light source irradiating conditions may be appropriately adjusted according to the type of positive electrode material powder to be measured. For example, when analyzing positive electrode material powder containing lithium nickel manganese cobalt oxide as the positive electrode active material, the light source irradiating conditions may be set with a shutter speed of 35 and a ring 95: coaxial 5 ratio, but it is not limited thereto, and if the type of positive electrode active material or the type of metallic foreign substance to be detected changes, the light source irradiating conditions may also change.

In terms of enhancing the detection capability of metallic foreign substances, it may be preferable that the shooting is performed at a high magnification of 300x or more, preferably 400x or more, and it is desirable to use a depth synthesis (depth-up) function.

Although not essential, the optical microscope may further include a laser light source 70 for the compositional analysis of metallic foreign substances. The laser light source 70 may be disposed parallel to the lens part 30 above the mounting part and may be configured to move up, down, left, and right. When a laser light source is provided in the optical microscope, it may be possible to analyze the composition of metallic foreign substances through destructive analysis using the laser light source.

For the laser light source 70, for example, a class 1 YAG laser may be used, with a wavelength range of about 300 nm to about 400 nm, such as 355 nm, but it is not limited thereto.

Also, it may be preferable that the laser light source has a laser spot size of about 5 µm or more, and it is desirable that the output be variably adjustable.

Meanwhile, the laser irradiation time may be about 1 to about 3 seconds, and it may be preferable that the laser irradiation is performed under ambient temperature and pressure conditions.

### (3) Analysis Part

The analysis part is provided to obtain foreign substance information within the positive electrode material by analyzing the optical images obtained from the measurement part, and it may include image analysis software either integrated into the optical microscope or linked to the optical microscope. In this case, it is desirable that the image analysis software is capable of performing functions such as automatic area measurement, color and luminance data extraction, and filtering.

For example, the analysis part may extract color and luminance data from the optical images transmitted from the measurement part and obtain shape information and location information of metallic foreign substances by using the extracted color and luminance data. For example, if the color and brightness values extracted from the optical image match a predetermined reference color and reference brightness of the foreign substance, it may be recognized as a metallic foreign substance. By storing data such as the location, area, and size of the recognized metallic foreign substance, the shape information and location information of the metallic foreign substance may be obtained.

The reference color and reference luminance of the foreign substance may be set by manufacturing a reference sample by adding metallic foreign substances to the positive electrode material powder and analyzing the reference sample according to the method of the present invention.

The analysis part may analyze the stitched images by stitching together each high-magnification and depth-synthesized optical image.

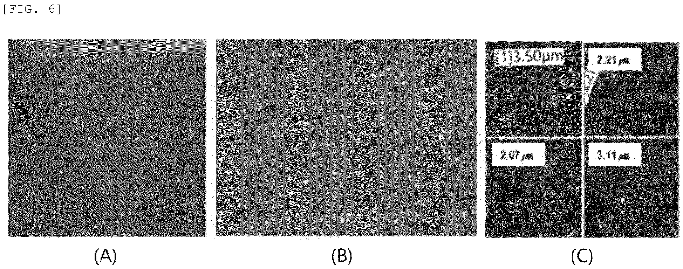

FIG. 6 shows the results of detecting metallic foreign substances by analyzing optical images measured at 400x magnification. In FIG. 6, part (A) is a stitched image of a 1 cm² area obtained by stitching multiple optical images, part (B) is an individual optical image captured at 400x magnification, and part (C) is an image showing an enlarged view of the metallic foreign substance particle area identified in the optical image. A portion indicated in white in part (B) of FIG. 6 represent the foreign substances. In FIG. 6, it may be observed that the analysis system of the present invention may be used to detect foreign substances having a fine size of about 10 µm or less and obtain the shape information such as the size of the foreign substance.

If necessary, the location information of the metallic foreign substances identified by the analysis part may be transmitted to the measurement part which includes an optical microscope having a laser light source. The measurement part may irradiate the metallic foreign substance with a laser based on the transmitted location information to obtain compositional information of the metallic foreign substance. Specifically, when the location information of the metallic foreign substances obtained by the analysis part is transmitted to the optical microscope, the laser light source irradiates the corresponding location based on the transmitted location information to burn the metallic foreign substance, and the line spectrum generated during this process may be used to obtain the compositional information of the metallic foreign substance.

### Analysis Method

Next, the method of analyzing metallic foreign substances in positive electrode materials according to the present invention will be explained.

The method for analyzing metallic foreign substances in positive electrode materials according to the present invention includes the following processes: A first process of applying the positive electrode material powder onto a substrate and then removing a portion of the applied positive electrode material powder to manufacture a monolayer sample; a second process of obtaining an optical image of the monolayer sample using an optical microscope; and a third process of analyzing the optical image of the monolayer sample to obtain foreign substance information within the positive electrode material.

Here, the positive electrode material powder may include various types of positive electrode material powders used in the field of secondary batteries, as described above. The positive electrode material powder may include a metallic foreign substance and a positive electrode active material particle. The types of metallic foreign substances and positive electrode active materials are the same as those described above.

The following is a detailed explanation of each process of the method of analyzing metallic foreign substances in the positive electrode materials according to the present invention.

### (1) First process: Monolayer sample manufacture process

First, a monolayer sample of positive electrode material powder is manufactured (first process). Here, the monolayer sample manufacture may be carried out using the following two methods.

According to the first aspect, the first process includes: applying a positive electrode material powder to be measured onto a stretchable substrate; and using a pressing member to push the positive electrode material powder applied on the stretchable substrate in one direction to remove an upper layer particles of the positive electrode material powder, thereby forming a monolayer.

Here, the stretchable substrate may be attached to a fixed substrate through an adhesive member, and since the stretchable substrate, pressing member, fixed member, and adhesive member are the same as those described in the pretreatment part, a detailed explanation is omitted.

Referring to FIG. 1, after applying the positive electrode material powder 30 to be measured onto the stretchable substrate 10A, the applied positive electrode material powder is pushed in one direction using the pressing member 20A. As a result, the positive electrode material particles of the upper layer of the positive electrode material powder are removed as it is pushed by the pressing member, and only the positive electrode material particles disposed in the lowest layer of the positive electrode material powder remain embedded on the surface of the stretchable substrate, forming a monolayer sample.

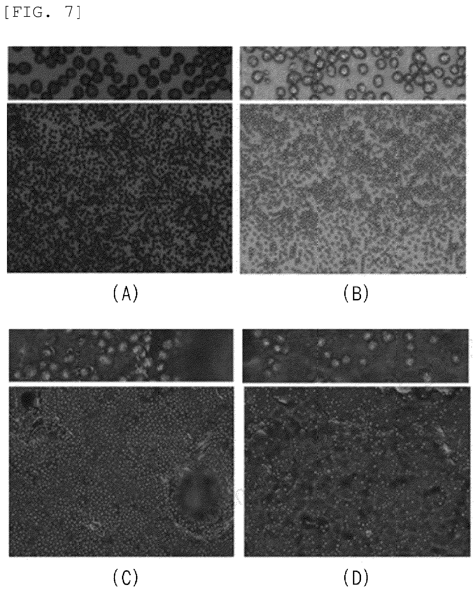

FIG. 7 shows optical images of samples manufactured using a stretchable substrate and samples manufactured using a carbon tape. Here, part (A) of FIG. 7 is an optical image of a sample manufactured by applying the positive electrode material powder onto a gel pad, which is attached onto a slide glass using double-sided tape, and then pushing it in one direction with a glass used for applying an external pressure; part (B) of FIG. 7 is an optical image of a sample manufactured by applying the positive electrode material powder onto Teflon tape, which is attached to slide glass using double-sided tape, and then pushing it in one direction with a glass used for applying an external pressure. Meanwhile, part (C) of FIG. 7 is an optical image of a sample manufactured by applying the positive electrode material powder onto a non-stretchable carbon tape and then pushing it in one direction using a pressing member; part (D) of FIG.7 is an optical image of a sample manufactured by sprinkling the positive electrode material powder onto the carbon tape to prevent particle stacking.

As shown in FIG. 7, in the case of samples A and B, which used a stretchable substrate, the particles were densely packed and well-dispersed without any interference or stacking between the particles. In contrast, sample C had issues with particle stacking, which caused the lowest layer particles to be obscured, and the carbon tape was damaged during pressing. For sample D, the particle density was too low, making it unsuitable for metallic foreign substance analysis, which requires the analysis of a large quantity.

According to the second aspect, the first process includes applying a positive electrode material powder to be measured onto an adhesive substrate; and removing particles of an upper layer of the positive electrode material powder applied onto the adhesive substrate to form a monolayer. If necessary, the first process may further include pressing the positive electrode material powder using a pressing member after applying it to the adhesive substrate to allow an even distribution of the positive electrode material powder onto the adhesive substrate.

In this case, since the adhesive substrate, delaminating member, and pressing member are the same as those described in the pretreatment part, a detailed explanation is omitted.

Referring to FIG. 2, after applying the positive electrode material powder 30 to be measured onto the adhesive substrate 10B and spreading it evenly using a pressing member not shown, the particles located in the lowest layer that are in contact with the adhesive substrate 10B adhere to it. Then, when the applied positive electrode material powder is pushed by the delaminating member 20B, positive electrode material particles in the upper layer of the positive electrode material powder adhere to the delaminating member 20B, which has relatively weaker adhesive strength, and is removed. Then, the positive electrode material particles in the lowest layer of the positive electrode material powder adhere to the adhesive substrate, which has relatively stronger adhesive strength, and remain, resulting in the manufacture of a monolayer sample.

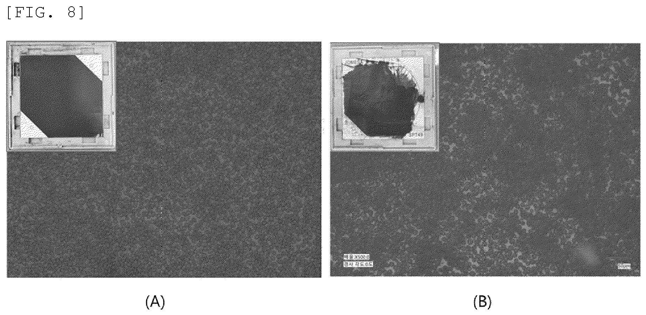

FIG. 8 shows an optical image (A) of a sample manufactured by applying the positive electrode material powder onto an adhesive substrate and then removing the upper layer particles with a delaminating member, and an optical image (B) of a sample prepared by applying the positive electrode material powder onto an adhesive substrate without undergoing the particle removal process using the delaminating member. Here, a particle trap was used as the adhesive substrate, and a DCR roller was used as the delaminating member.

As shown in FIG. 8, in the case of sample A, the particles were observed to be evenly distributed in a monolayer, whereas in sample B, which did not undergo the particle removal process, the upper layer particles were captured together, making it difficult to properly observe the lower layer particles and resulting in poor focus.

### (2) Second process: Optical Image Measurement Process

Next, an optical image of the monolayer sample obtained in the first process is captured using an optical microscope (Second Process) .

Here, the second process may be performed by adjusting the light source settings and shooting mode of the optical microscope to increase the luminance contrast between the positive electrode active material and the metallic foreign substances within the optical image.

Specifically, after placing the monolayer sample prepared in the first process onto the mounting part of the optical microscope, the shooting mode (image settings, color adjustment, etc.) and light source settings (brightness, irradiation method, etc.) of the optical microscope are appropriately adjusted. After specifying the area to be captured and adjusting the focus by controlling the driving part of the optical microscope, the sample image is captured to obtain the optical image.

Here, it may be preferable that the light source settings and shooting mode are adjusted to maximize the contrast in color and brightness between the background and the positive electrode active material and the metallic foreign substances in the optical image. For example, it may be preferable that the light source is set to a combination of coaxial irradiating and ring irradiating, and more preferably, the ring irradiating to coaxial irradiating ratio may be set to 95:5. When the light source irradiating conditions are set as described above, the contrast in brightness and color between the background, active material, and foreign substances in the optical image becomes pronounced, thereby increasing the identification of foreign substances (see FIGS. 3 and 4). Also, if necessary, the speed of the electronic shutter may be controlled to adjust the brightness of the light source. However, the light source setting conditions may vary depending on the type of positive electrode material to be measured.

Meanwhile, the shooting mode, for example, may be set by turning off edge strength, gamma, and offset in the image settings and setting RGB to a ratio of R:1.78, G:1.00, B:2.29, but it is not limited thereto and may be appropriately adjusted depending on the type of positive electrode material powder to be measured.

### (3) Third process: Optical image analysis process

Next, the optical image of the monolayer sample obtained in the second process is analyzed to obtain foreign substance information within the positive electrode material (Third Process).

At this time, the third process may include extracting color and brightness data from the optical image, identifying metallic foreign substances using the extracted color and brightness data, and obtaining shape information and location information of the identified metallic foreign substances.

For example, the identifying of the metallic foreign substances may be performed by comparing the color and brightness values extracted from the optical image using the predetermined reference color and reference brightness of the foreign substance, and by recognizing it as a metallic foreign substance when it satisfies the reference color and reference brightness. By storing data such as the location, area, and size of the recognized metallic foreign substance, the shape information and location information of the metallic foreign substance may be obtained. Here, the reference color and reference brightness of the foreign substance may be set by manufacturing a reference sample by adding metallic foreign substances to the positive electrode material powder and analyzing the reference sample according to the method of the present invention.

The analysis may be performed using image analysis software that is either integrated in the optical microscope or linked with the optical microscope. It may be preferable that the image analysis software may perform functions such as automatic area measurement, color and brightness data extraction, and filtering.

When the method is used, it may be possible to detect foreign substances having a size of about 10 µm or less and obtain the shape information, such as the size of the foreign substance, as well as location information (see FIG. 6).

Meanwhile, the analysis method according to the present invention may further include a process of analyzing the composition of the metallic foreign substance, if necessary.

The compositional analysis process may include, for example, transmitting the location information of the identified metallic foreign substance to an optical microscope equipped with a laser light source, and irradiating the metallic foreign substance with the laser based on the transmitted location information to obtain the compositional information of the metallic foreign substance.

When the laser is irradiated onto the metallic foreign substance, the metallic foreign substance burns due to the laser, generating a line spectrum. By analyzing the line spectrum, the compositional information of the metallic foreign substance may be obtained.

Meanwhile, to prevent measurement errors caused by elements contained in the air, it may be preferable to first obtain a line spectrum by irradiating the laser in a blank state, and then analyze the compositional information of the metallic foreign substance by excluding the overlapping areas of the line spectrum obtained from the metallic foreign substance and the line spectrum obtained in the blank state.

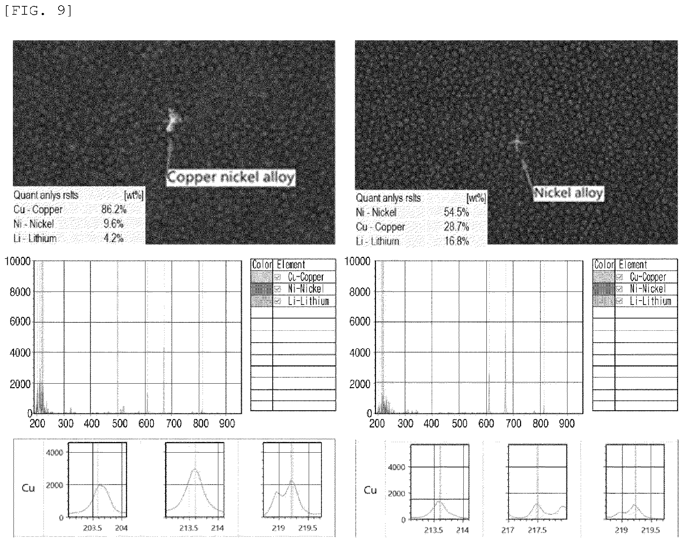

FIG. 9 shows a result of analyzing the composition of metallic foreign substances using a laser. Specifically, it shows the line spectrum measured by irradiating the laser on two particles identified as foreign substances through optical image analysis. As shown in FIG. 9, by analyzing the line spectrum, the composition of the particles may be confirmed.

## Claims

1. A system for analyzing metallic foreign substances in a positive electrode material, the system comprising:
a pretreatment part configured to prepare a monolayer sample of a positive electrode material powder;
a measurement part configured to obtain an optical image of the monolayer sample using an optical microscope; and
an analysis part configured to analyze the optical image of the monolayer sample, thereby obtaining information on foreign substances in the positive electrode material;
wherein the pretreatment part comprises a substrate on which the positive electrode material powder is applied and a first member configured to remove a portion of the positive electrode material powder applied on the substrate to allow positive electrode material particles to be distributed in a monolayer.

2. The system of claim 1, wherein the positive electrode material powder comprises metallic foreign substances and positive electrode active material particles.

3. The system of claim 2, wherein the metallic foreign substances comprise at least one material selected from the group consisting of Fe, Cr, Cu, and Zn.

4. The system of claim 2, wherein the positive electrode active material particles are lithium metal oxide that comprises at least one metal element selected from the group consisting of Ni, Co, Mn, and Al.

5. The system of claim 1, wherein the substrate is a stretchable substrate, and
the first member is a pressing member configured to press the positive electrode material powder applied on the stretchable substrate in one direction so that the positive electrode material particles are distributed in the monolayer on the stretchable substrate.

6. The system of claim 5, wherein the stretchable substrate is a gel-pad or a Teflon tape, and
the pressing member is made of a glass or ceramic material.

7. The system of claim 5, wherein the pretreatment part further comprises a fixing substrate to which the stretchable substrate is attached through an adhesive member.

8. The system of claim 7, wherein the fixing substrate is a glass substrate.

9. The system of claim 1, wherein the substrate is an adhesive substrate, and
the first member is a delaminating member that has adhesive force less than that of the adhesive substrate and removes particles existing on an upper layer of the positive electrode material powder applied on the adhesive substrate to allow the positive electrode material particles to be distributed in the monolayer on the adhesive substrate.

10. The system of claim 9, wherein the adhesive substrate is an adhesive tape, and the delaminating member is a DCR roller.

11. The system of claim 9, wherein the pretreatment part further comprises a pressing member configured to press the positive electrode material powder evenly onto the adhesive substrate.

12. The system of claim 1, wherein the optical microscope comprises:
a light source (10);
a CCD camera (20) disposed below the light source and configured to capture an optical image of a sample;
a lens part (30) disposed below the CCD camera and configured to magnify the image of the sample;
a mounting part (40) which is disposed below the lens part and on which the sample is placed;
a driving part (50) configured to move the mounting part and the lens part; and a polarizing part (60) disposed between the light source and the CCD camera to eliminate diffuse-reflected light from the sample.

13. The system of claim 12, wherein the light source is a high-brightness LED with an adjustable electronic shutter within a range of 1/60 to 1/20,000

14. The system of claim 12, wherein the light source enables co-axial irradiation and ring irradiation.

15. The system of claim 12, wherein the lens part has a magnification of 200x to 500x.

16. The system of claim 12, wherein the driving part comprises a stepping motor.

17. The system of claim 12, wherein the CCD camera has a resolution ranging from FHD to 4K.

18. The system of claim 12, wherein the polarizing part comprises an upper polarizing plate disposed at a side of the light source and a lower polarizing plate disposed at a side of the CCD camera.

19. The system of claim 18, wherein the polarizing part further comprises a polarizing filter disposed between the upper polarizing plate and the lower polarizing plate.

20. The system of claim 12, wherein the optical microscope further comprises a laser light source for compositional analysis of metallic foreign substances

21. The system of claim 20, wherein the laser light source is a YAG laser.

22. The system of claim 20, wherein the laser light source has a laser spot size of 5 µm or more.

23. The system of claim 20, wherein the laser light source has an output that is variably adjustable.

24. The system of claim 1, wherein the analysis part extracts color and luminance data from the optical image of the monolayer sample to use the extracted color and luminance data so as to identify shape information and location information of the metallic foreign substances.

25. The system of claim 24, wherein the analysis part transmits the identified location information of the metallic foreign substances to a measurement part, and
the measurement part acquires compositional information of the metallic foreign substances by irradiating a laser onto the metallic foreign substances based on the transmitted location information.

26. A method for analyzing metallic foreign substances in a positive electrode material, the method comprising:
a first process of applying positive electrode material powder onto a substrate and removing a portion of the applied positive electrode material powder to manufacture a monolayer sample;
a second process of obtaining an optical image of the monolayer sample using an optical microscope; and
a third process of analyzing the optical image of the monolayer sample to obtain information on foreign substances in the positive electrode material.

27. The method of claim 26, wherein the first process comprises:
applying the positive electrode material powder to be measured onto a stretchable substrate; and
pressing the positive electrode material powder applied on the stretchable substrate in one direction using a pressing member to remove upper layer particles and form a monolayer.

28. The method of claim 27, wherein the stretchable substrate is attached to a fixed substrate through an adhesive member.

29. The method of claim 26, wherein the first process comprises:
applying the positive electrode material powder to be measured onto an adhesive substrate; and
removing the upper layer particles of the positive electrode material powder applied on the adhesive substrate using a delaminating member to form a monolayer.

30. The method of claim 26, wherein the second process is performed by adjusting light source settings and an imaging mode of the optical microscope so that a color and luminance contrast between the positive electrode active material and the metallic foreign substances in the optical image increases.

31. The method of claim 30, wherein the light source is set as a combination of co-axial irradiation and ring irradiation.

32. The method of claim 31, wherein the light source is set so that the ratio of ring irradiation to co-axial irradiation is 95:5.

33. The method of claim 31, wherein the third process comprises extracting color and luminance data from the optical image to use the extracted color and luminance data so as to identify the shape information and location information of the metallic foreign substances.

34. The method of claim 31, wherein the optical microscope further comprises a laser light source,
the third process further comprises:
transmitting the location information of the identified metallic foreign substances to the optical microscope equipped with the laser light source, and
irradiating a laser onto the metallic foreign substances based on the transmitted location information of the metallic foreign substances to obtain compositional information of the metallic foreign substances.

35. An optical microscope comprising:
a light source;
a CCD camera disposed below the light source and configured to capture an optical image of a sample;
a lens part disposed below the CCD camera and configured to magnify the image of the sample;
a mounting part which is disposed below the lens par and on which the sample is placed;
a driving part configured to move the mounting part and the lens part; and
a polarizing part disposed between the light source and the CCD camera to eliminate diffuse-reflected light from the sample.

36. The optical microscope of claim 35, wherein the light source comprises an electronic shutter that is a high-brightness LED adjustable within the range of 1/60 to 1/20000.

37. The optical microscope of claim 35, wherein the light source enables co-axial irradiation and ring irradiation.

38. The optical microscope of claim 35, wherein the lens part has a magnification of 200x to 500x.

39. The optical microscope of claim 35, wherein the driving part comprises a stepping motor.

40. The optical microscope of claim 35, wherein the CCD camera has a resolution ranging from FHD to 4K.

41. The optical microscope of claim 35, wherein the polarizing part comprises an upper polarizing plate disposed at a light source side and a lower polarizing plate disposed at a CCD camera side.

42. The optical microscope of claim 41, wherein the polarizing part further comprises a polarizing filter disposed between the upper polarizing plate and the lower polarizing plate.

43. The optical microscope of claim 35, wherein the optical microscope further comprises a laser light source for compositional analysis of metallic foreign substances.

44. The optical microscope of claim 43, wherein the laser light source is a YAG laser.

45. The optical microscope of claim 43, wherein the laser light source has a laser spot size of 5 µm or more.

46. The optical microscope of claim 43, wherein the laser light source has an output that is variably adjustable.
